# EUROPÄISCHE PATENTSCHRIFT

(11) **EP 3 132 978 B1**
(45) Veröffentlichungstag und Bekanntmachung des Hinweises auf die Patenterteilung: **05.06.2019**
(21) Anmeldenummer: 16175695.2
(22) Anmeldetag: 22.06.2016
(51) Int. Cl.: B60R 13/02, B60N 3/02

(54) **HAPTISCHE HALTESTANGENABDECKUNG**
HAPTIC RETENTION ROD COVER
RECOUVREMENT DE TIGE DE MAINTIEN HAPTIQUE

(30) Priorität: 19.08.2015 DE 102015215780
(43) Veröffentlichungstag der Anmeldung: 22.02.2017
(73) Patentinhaber: Siemens Mobility GmbH, 81739 München (DE)
(72) Erfinder: Leiker, Fritz, 91052 Erlangen (DE); Eufinger, Tina, 91054 Erlangen (DE); Rubinchik, Konstantin, 90449 Nürnberg (DE)

(56) Entgegenhaltungen:
- DE-A1-102005 026 836
- DE-U1- 29 920 776
- GB-A- 2 510 591
- US-A- 5 065 837
- US-B1- 6 854 163

## Beschreibung

Die Erfindung betrifft eine Abdeckung für eine Haltestange eines öffentlichen Verkehrsmittels.

Beim Ausfall einer Tür eines Busses oder eines Schienenfahrzeugs des öffentlichen Personenverkehrs hat der Fahrer die Möglichkeit, diese außer Betrieb zu setzen und mechanisch abzusperren. Die Mitteilung des Defekts der Tür erfolgt in der Regel über ein Türstörungstransparent oder einem vom Fahrer an der Tür angebrachten Schild. Eine Information für sehbehinderte Fahrgäste ist nicht vorgesehen.

Aus dem Patent US 6,854,163 B1 bekannt geworden ist auch eine Abdeckung für eine Haltestange eines öffentlichen Verkehrsmittels, welche ausgebildet ist, lösbar mit der Haltestange verbunden zu werden und welche Schriftzeichen in Blindenschrift zur Wiedergabe von Informationen an sehbehinderte Fahrgäste umfasst.

Die Gebrauchsmusterschrift DE 299 20 776 U1 offenbart einen Haltegriff für Fahrzeuginnenräume.

Die Druckschrift UK 2510591 A1 lehrt einen Halter zum Befestigen eines Werbemittels an einer Haltestange eines Fahrzeugs. Dieser umfasst eine transparente Hülle, welche die Werbebotschaft umschließt.

Der Erfindung liegt die Aufgabe zugrunde, den Komfort für sehbehinderte Fahrgäste zu verbessern.

Gelöst wird die Aufgabe durch den Gegenstand des unabhängigen Patentanspruchs 1. Weiterbildungen und Ausgestaltungen der Erfindung finden sich in den Merkmalen der abhängigen Patentansprüche wieder.

Die Schriftzeichen in Blindenschrift zeigen insbesondere einen Defekt einer Tür und/oder den Weg zu einer benachbarten Tür an.

Als Blindenschrift bezeichnet man eine Schrift, die von Blinden gelesen werden kann. Das Lesen erfolgt dabei mit dem Tastsinn der Finger. Die Schrift ist gegenüber dem Untergrund erhaben oder als Inschrift bzw. Gravur ausgeführt. Weit verbreitet ist die sogenannte Brailleschrift. Jedoch auch andere Arten von Blindenschrift sind bekannt.

Die Abdeckung ist in Längsrichtung zweigeteilt. Die Halbschalen lassen sich um einen vorgegeben Abschnitt der Haltestange legen und mittels des Rastmechanismus an diesem befestigen, indem die Abdeckung den vorgegeben Abschnitt der Haltestange umschließt.

Eine Halbschale alleine fasst also nur einen Teil des vorgegeben Abschnitts der Haltestange ein. Eine der Halbschalen wird um den vorgegeben Abschnitt der Haltestange gelegt und mit Einrasten der anderen Halbschale an der Haltestange befestigt. Dabei wird die Haltestange dann radial von der geschlossenen Abdeckung umschlossen. Der vorgegebene Abschnitt der Haltestange wird insbesondere vollständig umschlossen. Dabei wird der vorgegebene Abschnitt der Haltestange zwischen die Halbschalen geklemmt.

Um ortsfest mit der Haltestange verbunden zu werden, und somit gegen Verschieben entlang der Haltestange an dieser fixiert zu sein, sind mehrere Ausführungen denkbar. So könnte einerseits die Abdeckung eine hohe Klemmkraft auf die Haltestange ausüben und einen hohen Reibungskoeffizienten zur Haltestange aufweisen. Dazu ist die der Haltestange zugewandte Oberfläche der Abdeckung entsprechend geeignet ausgestaltet. Überdies sind die Werkstoffe der Haltestange und der Abdeckung aufeinander abgestimmt. Zusätzlich oder alternativ sind die einander berührenden Oberflächen von Abdeckung sowie Haltestange aufeinander abgestimmt und so ausgewählt, dass bei einer vorgegebenen Klemmkraft eine vorgegebene Mindestkraft einer Verschiebung der Abdeckung entlang der Haltestange entgegenwirkt. Somit ist die Abdeckung ortsfest mit einer insbesondere rohrförmig und geradlinig verlaufenden Haltestange lösbar zu verbinden.

Andererseits weist die Haltestange im vorgegeben Abschnitt der Haltestange eine vorgegebene Krümmung auf und die Abdeckung ist komplementär zur Haltestange ausgebildet. Die Abdeckung umschließt die Haltestange im Bereich der Krümmung und ist geometrisch gegen Verschiebung gesichert. Insbesondere wenn die unmittelbare Nachbarschaft zum vorgegeben Abschnitt der Haltestange eine andere oder keine Krümmung aufweist. An einem geradlinig ausgebildeten vorgegeben Abschnitt der Haltestange, welcher in unmittelbarer Nachbarschaft einseitig oder beidseitig eine Krümmung aufweist, kann die Abdeckung ebenfalls ortsfest angeordnet werden. Die Abdeckung ist wiederum komplementär zum vorgegeben Abschnitt der Haltestange, hier also geradlinig, ausgebildet. Die Krümmung der Haltestange in unmittelbarer Nachbarschaft des vorgegeben Abschnitts der Haltestange verhindert ein Verschieben der Abdeckung in Richtung bzw. über die Krümmung.

Eine weitere Weiterbildung der Erfindung sieht vor, dass die Abdeckung ausgebildet ist, eine Haltewunsch- oder eine Türöffnungstaste abzudecken. Haltewunsch- oder Türöffnungstasten sind üblicherweise auf Haltestangen angeordnet und sind somit Teil der Haltestange.

Um die Haltewunsch- oder Türöffnungstaste abzudecken kann eine ansonsten rohrförmig ausgebildete Abdeckung eine Ausbuchtung aufweisen, um die Haltewunsch- oder eine Türöffnungstaste abzudecken und gegebenenfalls ebenfalls mit zu umschließen. Wird eine gegenüber der Haltestange erhabene Haltewunsch- oder Türöffnungstaste zumindest teilweise umschlossen, ist die Abdeckung ebenfalls gegen Verschieben gesichert.

Eine weitere Möglichkeit die Haltewunsch- oder Türöffnungstaste abzudecken besteht darin, dass die Abdeckung eine überstehende Lasche oder Krempe aufweist, die im montierten Gebrauchszustand der Abdeckung über die Haltewunsch- oder Türöffnungstaste ragt und diese somit abdeckt.

Die Abdeckung ist weitergebildet mittels eines additiven Fertigungsverfahren hergestellt. Das Aufbringen der Blindenschrift kann somit im Fertigungsprozess integriert sein.

Die Abdeckung kann die Informationen in Blindenschrift auch in Schwarzschrift aufweisen. Weitergebildet trägt die Abdeckung eine Beschriftung in Leuchtschrift, die insbesondere fluoreszierend oder phosphoreszierend ist, damit sie für sehende Fahrgäste auch im Dunkeln sichtbar ist.

Ein erfindungsgemäßes Fahrzeug des öffentlichen Personenverkehrs umfasst wenigstens eine erfindungsgemäße Abdeckung.

Diese ist im Gebrauchszustand mit einer Haltestange des Fahrzeugs lösbar verbunden und weitergebildet so an der Haltestange angeordnet, dass sie eine Haltewunsch- oder eine Türöffnungstaste abdeckt.

Wie oben bereits ausgeführt, kann die Abdeckung einen vorgegebenen Abschnitt der Haltestange umschließen.

Dazu ist die Abdeckung weitergebildet komplementär zu einem vorgegebenem Abschnitt der Haltestange ausgebildet. Natürlich ist sie zu dem vorgegebenen Abschnitt der Haltestange komplementär ausgebildet, den sie umschließt.

Dann ist insbesondere die Abdeckung der äußeren Kontur der Haltstange angepasst, beispielsweise der Innendurchmesser der zumindest teilweise rohrförmigen Abdeckung an den Außendurchmesser der rohrförmigen Haltestange angepasst und auch in Längsrichtung dem Verlauf der Haltestange folgend.

Ein Verfahren zur Montage einer erfindungsgemäßen Abdeckung ist durch folgende Verfahrensschritte gekennzeichnet:
- Anlegen der ersten Halbschale an den vorgegebenen Abschnitt der Haltestange unter Einfassung eines Teils des vorgegebenen Abschnitt der Haltestange;
- Anlegen der zweiten Halbschale an die erste Halbschale unter Einfassung eines Teils des vorgegebenen Abschnitt der Haltestange;
- Einrasten des Rastmechanismus der ersten und der zweiten Halbschale.

Alternativ kann der Rastmechanismus auch so ausgebildet sein, dass sich die zweite Halbschale entlang der ersten Halbschale verschieben lässt, um sie miteinander zu verschließen

Die Abdeckung ist werkzeuglos schnell und einfach montierbar, sowie auch demontierbar. Sie ist bedarfsgerecht auszubilden. Soll beispielsweise eine defekte Tür angezeigt werden, wird die Abdeckung vom Fahrer im Bereich der defekten Tür angebracht. Wenn sich nun ein sehbehinderter Fahrgast beim Ausstiegsvorgang an der Haltestange im Bereich der Tür festhält, erfährt er, dass die Türe defekt ist. Durch eine Aufschrift in Schwarzschrift werden auch die übrigen Fahrgäste informiert. Ein zusätzliches Anbringen eines Schilds oder ähnlichem entfällt zudem.

Die Erfindung lässt zahlreiche Ausführungsformen zu. Sie wird anhand der nachfolgenden Figuren näher erläutert, in denen jeweils ein Ausgestaltungsbeispiel dargestellt ist. Gleiche Elemente in den Figuren sind mit gleichen Bezugszeichen versehen.
- Fig. 1: zeigt eine erfindungsgemäße Abdeckung schematisch in perspektivischer Ansicht,
- Fig. 2: zeigt ein weiteres Ausgestaltungsbeispiel einer erfindungsgemäßen Abdeckung mit einer Ausbuchtung zur Abdeckung einer Haltewunsch- oder eine Türöffnungstaste schematisch in perspektivischer Ansicht,
- Fig. 3: zeigt die Abdeckung gemäß Fig. 2 aus anderer Perspektive,
- Fig. 4: zeigt die Abdeckung gemäß Fig. 2 im Schnitt.

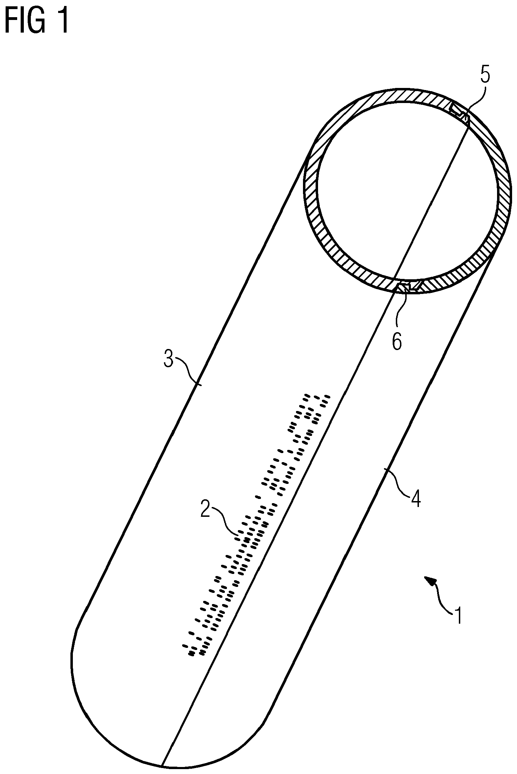

In Fig. 1 ist eine erfindungsgemäße Abdeckung 1 dreidimensional dargestellt. Die Abdeckung 1 umfasst hier zwei Halbschalen 3 und 4. Diese können um einen vorgegeben Abschnitt der Haltestange gelegt werden.

Darüber hinaus bilden die Halbschalen 3 und 4 der Abdeckung 1 einen zueinander komplementären Rastmechanismus aus, um sie miteinander zu verschließen. Der Rastmechanismus ist hier gebildet durch ineinandergreifende, in Längsrichtung verlaufende Nut 5 und Feder 6. Jede der Halbschalen 3 und 4 weist hier zwei gegenüberliegende und entgegen gerichtete Nuten 5 und Federn 6. Die Nuten 5 und Federn 6 der Halbschalen 3 und 4 sind wiederum komplementär zueinander ausgebildet, so dass eine Feder 6 der einen Halbschale 3 in eine Nut 5 der anderen Habschale 4 eingreift und umgekehrt. Da die Nuten 5 und Federn 6 an den jeweiligen Rändern der Halbschalen 3 und 4 angeordnet sind und entgegengesetzt ausgerichtet sind, lassen sich die Halbschalen 3 und 4 aneinander legen und durch eine aufeinander gerichtete Kraft einrasten und somit miteinander verschließen. Hier lässt sich zudem eine Halbschale 3 im Eingriff von Nut 5 und Feder 5 entlang der anderen Halbschale 4 zu dieser verschieben.

Die Halbschalen 3 und 4 fassen im Gebrauchszustand jeweils einen Teil der Haltestange ein und umschließen diese zusammen radial. Hier ist eine geradlinig verlaufende Abdeckung für einen rohrförmig und ebenfalls geradlinig verlaufenden Abschnitt einer Haltestange skizziert. Um nicht entlang der Haltestange verschoben zu werden, wird diese zwischen die Halbschalen geklemmt.

Die Abdeckung weist Schriftzeichen in Blindenschrift zur Wiedergabe von Informationen an sehbehinderte Fahrgäste auf. Hier ist eine Brailleschrift 2 auf der Halbschale 3 vorgesehen, die dem Fahrgast eine defekte Tür anzeigt.

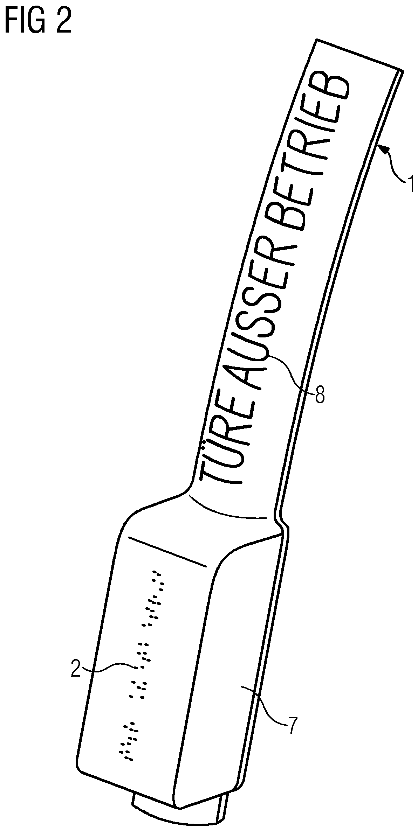

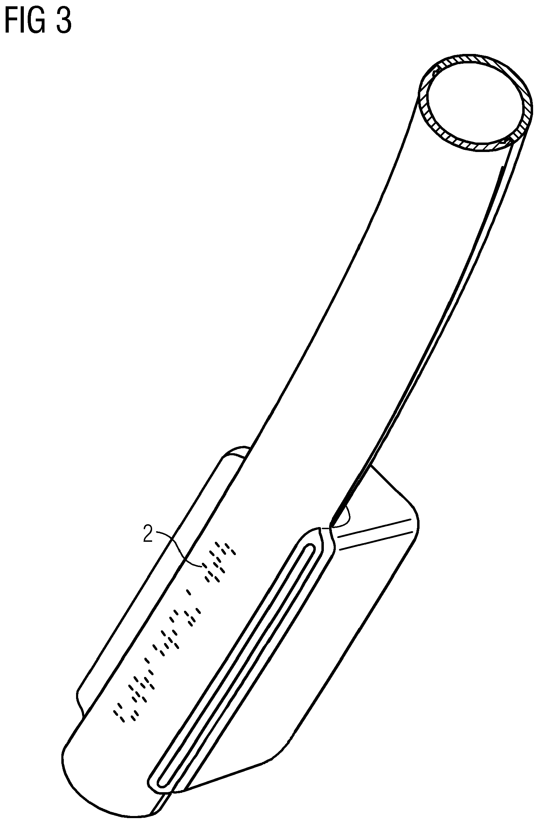

Die Abdeckung 1 der Fig. 2 weist neben der Brailleschrift 2 eine Schwarzschrift 8 auf, die ebenfalls auf die defekte Tür hinweist. Diese kann auch in Leuchtschrift und/oder fluoreszierend oder phosphoreszierend ausgeführt sein. Wie in Fig. 3 zu sehen, sind auch auf der im Gebrauchszustand rückwärtigen Seite der Abdeckung 1 Schriftzeichen in Blindenschrift vorgesehen.

Die Abdeckung 1 ist leicht gekrümmt, um einen komplementär gekrümmten Abschnitt der Haltestange zu umschließen. Darüber hinaus ist die Abdeckung 1 hier ausgebildet, eine Haltewunsch- oder eine Türöffnungstaste abzudecken. Dazu weist sie eine Ausbuchtung 7 auf. Die Krümmung ist unabhängig von der Ausbuchtung 7. Verläuft die Haltestange in unmittelbarer Umgebung des vorgegebenen Abschnitts nicht stetig fort, ist die Abdeckung 1 so gegen verrutschen gesichert. Hier wird zusätzlich die vorhandene Form der Haltewunsch- oder Türöffnungstaste zur Positionierung und Fixierung genutzt.

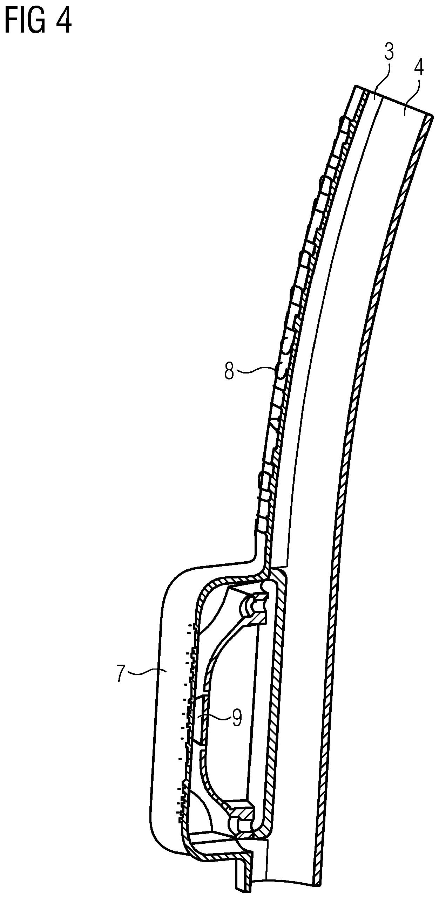

In Fig. 4 ist die Abdeckung 1 im montierten Gebrauchszustand veranschaulicht. Die Haltewunsch- oder Türöffnungstaste 9 wird hier von der Ausbuchtung 7 der Abdeckung umschlossen.

## Patentansprüche

1. Abdeckung (1) für eine Haltestange eines öffentlichen Verkehrsmittels, die ausgebildet ist, lösbar mit der Haltestange verbunden zu werden und die Schriftzeichen (2) in Blindenschrift zur Wiedergabe von Informationen an sehbehinderte Fahrgäste umfasst, **dadurch gekennzeichnet, dass** sie zwei Halbschalen (3, 4) umfasst, die einen zueinander komplementären Rastmechanismus (5, 6) aufweisen, um die Halbschalen (3, 4) unter Umschließen der Haltestange lösbar miteinander zu verschließen, wobei die Halbschalen (3, 4) ausgebildet sind, einen vorgegebenen Abschnitt der Haltestange einzuklemmen.

2. Abdeckung nach Anspruch 1,
**dadurch gekennzeichnet, dass**
sie ausgebildet ist, eine Haltewunsch- oder eine Türöffnungstaste (9) abzudecken.

3. Abdeckung nach einem der Ansprüche 1 oder 2,
**dadurch gekennzeichnet, dass**
sie mittels eines additiven Fertigungsverfahren herstellbar ist.

4. Abdeckung nach einem der Ansprüche 1 bis 3,
**dadurch gekennzeichnet, dass**
die Schriftzeichen (2) in Blindenschrift einen Defekt der Tür und/oder den Weg zur benachbarten Tür anzeigen.

5. Fahrzeug des öffentlichen Personenverkehrs mit wenigstens einer Abdeckung (1) nach einem der Ansprüche 1 bis 4, wobei die Abdeckung (1) lösbar mit einer Haltestange des Fahrzeugs verbunden ist.

6. Fahrzeug nach Anspruch 5,
**dadurch gekennzeichnet, dass**
die Abdeckung (1) so an der Haltestange angeordnet ist, dass sie eine Haltewunsch- oder eine Türöffnungstaste (9) abdeckt.

7. Fahrzeug nach einem der Ansprüche 5 oder 6,
**dadurch gekennzeichnet, dass**
die Abdeckung (1) komplementär zu einem vorgegebenem Abschnitt der Haltestange ausgebildet ist.

## Claims

1. Cover (1) for a handrail of a public means of transportation, which is designed to be releasably connected to the handrail and which comprises characters (2) in blind script for conveying information to visually impaired passengers, **characterized in that** said cover (1) comprises two half shells (3, 4) which have a latching mechanism (5, 6) with complementary parts, in order to lock the half shells (3, 4) to one another in a releasable fashion while enclosing the handrail, wherein the half shells (3, 4) are designed to clamp a predefined section of the handrail.

2. Cover according to Claim 1,
**characterized in that**
the said cover is designed to cover a stop request or door-opening button (9).

3. Cover according to one of Claims 1 or 2,
**characterized in that**
it can be manufactured by means of an additive fabrication method.

4. Cover according to one of Claims 1 to 3,
**characterized in that**
the characters (2) in blind script indicate a defect in the door and/or the way to the adjacent door.

5. Public transportation vehicle having at least one cover (1) according to one of Claims 1 to 4, wherein the cover (1) is releasably connected to a handrail of the vehicle.

6. Vehicle according to Claim 5,
**characterized in that**
the cover (1) is arranged on the handrail in such a way that it covers a stop request or door-opening button (9).

7. The vehicle according to one of Claims 5 or 6,
**characterized in that**
the cover (1) is designed so as to be complementary to a predefined section of the handrail.

## Revendications

1. Recouvrement (1) d'une tige de maintien d'un moyen de transport public, constitué pour être assemblé de manière amovible à la tige de maintien et comprenant des caractères (2) en braille pour reproduire des informations pour des passagers handicapés en vision, **caractérisé**
**en ce qu'**il comprend deux hémicoquilles (3, 4), qui ont un mécanisme (5, 6) d'encliquètement complémentaire l'un de l'autre, afin de fermer entre elles, de manière amovible, les hémicoquilles (3, 4), en enfermant la tige de maintien, les hémicoquilles (3, 4) étant constituées pour serrer une partie donnée à l'avance de la tige de maintien.

2. Recouvrement suivant la revendication 1,
**caractérisé en ce qu'**
il est constitué pour recouvrir une touche (9) de souhait d'arrêt ou d'ouverture de porte.

3. Recouvrement suivant l'une des revendications 1 à 2,
**caractérisé en ce qu'**
il peut être fabriqué par un procédé de fabrication additif.

4. Recouvrement suivant l'une des revendications 1 à 3,
**caractérisé en ce que**
les caractères (2) en braille indiquent un défaut de la porte et/ou le chemin vers la porte voisine.

5. Véhicule du trafic public des voyageurs, comprenant au moins un recouvrement (1) suivant l'une des revendications 1 à 4, le recouvrement (1) étant assemblé de manière amovible à une tige de maintien du véhicule.

6. Véhicule suivant la revendication 5,
**caractérisé en ce que**
le recouvrement (1) est monté sur la tige de maintien, de manière à recouvrir une touche (9) de souhait d'arrêt ou d'ouverture de porte.

7. Véhicule suivant l'une des revendications 5 ou 6,
**caractérisé en ce que**
le recouvrement (1) est constitué de manière complémentaire à une partie donnée à l'avance de la tige de maintien.
